# EUROPEAN PATENT APPLICATION

(11) **EP 4 513 697 A1**
(43) Date of publication of application: **26.02.2025**
(21) Application number: 23218830.0
(22) Date of filing: 20.12.2023
(51) Int. Cl.: H02J 1/02

(54) **VOLTAGE STABILIZING CIRCUIT AND DC MICROGRID**

(30) Priority: 24.08.2023 CN 202322288538 U
(71) Applicant: Schneider Electric (China) Co., Ltd., Beijing 100102 (CN)
(72) Inventor: LU, Feng, Beijing 100102 (CN); ZHAO, Haijun, Beijing 100102 (CN); BAI, Jialu, Beijing 100102 (CN)
(74) Representative: Manitz Finsterwald Patent- und Rechtsanwaltspartnerschaft mbB

(57) **Abstract**

Embodiments of the present disclosure provide a voltage stabilizing circuit (10) and a DC microgrid. The voltage stabilizing circuit (10) includes: a first input terminal (Lin) and a second input terminal (Nin) for receiving power input; a switch unit (111) including a first switch (CB1) and a second switch (CB2), a first end of the first switch (CB1) being connected to the first input terminal (Lin), and a first end of the second switch (CB2) being connected to the second input terminal (Nin); an isolation unit (12) including a first inductor (121 L1) and a second inductor (122 L2), a first end of the first inductor (121 L1) being connected to a second end of the first switch (CB1), and a first end of the second inductor (122 L2) being connected to a second end of the second switch (CB2); an adjustment unit (13) connected to second ends of the first inductor (121 L1) and the second inductor (122 L2), the adjustment unit (13) being capable of storing electric energy of the power input and providing a regulated power input; and a first output terminal (Lout) and a second output terminal (Nout), the first output terminal (Lout) being connected to a node between the adjustment unit (13) and the first inductor (121 L1), and the second output terminal (Nout) being connected to a node between the adjustment unit (13) and the second inductor (122 L2) to output the regulated power input.

## Description

### FIELD

Embodiments of the present disclosure relates to the field of electric equipment, and more particularly to a voltage stabilizing circuit and a DC microgrid including the voltage stabilizing circuit.

### BACKGROUND

A DC microgrid is an important part of intelligent power distribution system, which is mainly used to provide power to parks and buildings. The DC microgrid usually provides power to electrical devices in various parks and buildings by extending a plurality of branches from a main circuit with DC power supply.

However, in the case that a short circuit or other fault occurs in at least one electrical equipment, the voltage amplitudes and current amplitudes of other electrical devices on the branch and the main circuit will change drastically, which will affect the power quality of the DC microgrid and even burn out the electrical devices in severe cases.

### SUMMARY

An object of the present disclosure is to provide a voltage stabilizing circuit and a DC microgrid including the voltage stabilizing circuit to at least partially solve the above problems.

In a first aspect of the present disclosure, there is provided a voltage stabilizing circuit, including: a first input terminal and a second input terminal for receiving power input; a switch unit, the switch unit comprises a first switch and a second switch, a first end of the first switch is connected to the first input terminal, and a first end of the second switch is connected to the second input terminal; an isolation unit, the isolation unit includes a first inductor and a second inductor, a first end of the first inductor is connected to a second end of the first switch, and a first end of the second inductor is connected to a second end of the second switch; an adjustment unit connected to second ends of the first inductor and the second inductor, the adjustment unit is capable of storing electrical energy of the power input and providing a regulated power input; and a first output terminal and a second output terminal, the first output terminal is connected to a node between the adjustment unit and the first inductor, and the second output terminal is connected to a node between the adjustment unit and the second inductor, to output the regulated power input. The voltage stabilizing circuit according to embodiments of the present disclosure can reliably stabilize the voltage amplitude of the power input within a predetermined threshold range by storing the electric energy of the power input, which greatly improves the stability of the circuit where the voltage stabilizing circuit is located; in addition, the isolation unit can prevent the influence of a branch where the voltage stabilizing circuit is located on other branches.

In some embodiments, the voltage stabilizing circuit further includes a control unit, the control unit is connected to a control terminal of the switch unit, a control terminal of the isolation unit and a control terminal of the adjustment unit, the control unit is capable of controlling the first switch and the second switch to be turned on and off, the control unit is capable of controlling the isolation unit to change inductance values of the first inductor and the second inductor, and the control unit is capable of controlling a rate at which the adjustment unit stores the electrical energy. In such embodiments, the state of the switch unit, the isolation unit and the adjustment unit can be reliably controlled by the control unit, thereby realizing reliable circuit isolation and voltage regulation functions.

In some embodiments, the voltage stabilizing circuit further includes a current stabilizing unit, the current stabilizing unit includes a third inductor and a fourth inductor, a first end of the third inductor is connected to a node between the adjustment unit and the first inductor and a second end of the third inductor is connected to the first output terminal, a first end of the fourth inductor is connected to a node between the adjustment unit and the second inductor and a second end of the fourth inductor is connected to the second output terminal, and a control terminal of the current stabilizing unit is connected to the control unit, the current stabilizing unit is capable of changing inductance values of the third inductor and the fourth inductor under control of the control unit. In such embodiments, the current stabilizing unit provided in the voltage stabilizing circuit can further stabilize the current of the power input.

In some embodiments, the adjustment unit includes: a capacitor with a first end connected to a node between the first inductor and the third inductor; a first resistor with a first end connected to a second end of the capacitor; a third switch with one end connected to a node between the second inductor and the fourth inductor and another end connected to a second end of the first resistor, the third switch being capable of being turned on and off under control of the control unit; a second resistor with a first end connected to a node between the capacitor and the first resistor; a fourth switch with one end connected to a node between the second inductor and the fourth inductor and another end connected to a second end of the second resistor, the fourth switch being capable of being turned on and off under control of the control unit; and a fifth switch with one end connected to a node between the second inductor and the fourth inductor and another end connected to the capacitor, the fifth switch being capable of being turned on and off under control of the control unit. In such embodiments, by using the capacitor as a main element of the adjustment unit, the electrical energy of the power input can be reliably stored.

In some embodiments, the capacitor is capable of being charged in a case where the control unit controls the third switch to be turned on until an electricity amount in the capacitor reaches a first electricity amount threshold, the capacitor is capable of being charged in a case where the control unit controls the third switch and the fourth switch to be turned on until the electricity amount in the capacitor reaches a second electricity amount threshold, and the capacitor is capable of being charged in a case where the control unit controls the third switch, the fourth switch and the fifth switch to be turned on until the electricity amount in the capacitor reaches a maximum electricity amount value of the capacitor. In such embodiments, by changing the resistance value of the series resistor of the capacitor by stages, the capacitor can be charged smoothly and thus is prevented from being burned out.

In some embodiments, the adjustment unit includes: a capacitor with a first end connected to a node between the first inductor and the third inductor; a first resistor with a first end connected to a second end of the capacitor; a third switch with one end connected to a node between the second inductor and the fourth inductor and another end connected to a second end of the first resistor, wherein, the third switch being capable of being turned on and off under control of the control unit; a second resistor with a first end connected to a node between the first resistor and the third switch; a fourth switch with one end connected to a node between the first resistor and the capacitor and another end connected to a second end of the second resistor, the fourth switch being capable of being turned on and off under control of the control unit; and a fifth switch with one end connected to a node between the first resistor and the capacitor and another end connected to a node between the first resistor and the third switch, the fifth switch being capable of being turned on and off under control of the control unit. In such embodiments, the capacitor can be reliably charged in stages by using a control unit to control the adjustment unit to be turned on and off.

In some embodiments, the capacitor the capacitor is capable of being charged in a case where the control unit controls the third switch to be turned on until an electricity amount in the capacitor reaches a first electricity amount threshold, the capacitor is capable of being charged in a case where the control unit controls the third switch and the fourth switch to be turned on until the a electricity amount in the capacitor reaches a second electricity amount threshold, and the capacitor is capable of being charged in a case where the control unit controls the third switch, the fourth switch and the fifth switch to be turned on until the electricity amount in the capacitor reaches a maximum electricity amount of the capacitor. In such embodiments, the charging rate of the capacitor can be controlled by setting a plurality of electricity amount threshold.

In some embodiments, the adjustment unit includes: a capacitor with a first end connected to a node between the first inductor and the third inductor; a resistor with a first end connected to a second end of the capacitor and a second end connected to a node between the second inductor and the fourth inductor; and a switch with one end connected to a node between the second inductor and the fourth inductor and another end connected to a node between the capacitor and the resistor, the switch can be turned on and off under the control of the control unit. The structure of the adjustment unit is simple and inexpensive, which further improves the application range of the voltage stabilizing circuit.

In some embodiments, the capacitor is capable of being charged in a case where the control unit controls the switch to be turned off until an electricity amount in the capacitor reaches a first electricity amount threshold, and the capacitor is capable of being charged in a case where the control unit controls the switch to be turned on until the electricity amount in the capacitor reaches a maximum electricity amount value of the capacitor. In such embodiments, by setting an electricity amount threshold, the electricity amount in the capacitor may reach the maximum electricity amount value faster under the premise of smooth charging.

In the second aspect of the present disclosure, there is provided a DC microgrid, including: a main circuit; and a plurality of branches, the plurality of branches are connected to the main circuit to receive power input provided by the main circuit, and each branch in the plurality of branches is provided with the voltage stabilizing circuit according to the first aspect of the present disclosure; the first input terminal and the second input terminal of the voltage stabilizing circuit are connected to the main circuit, and the adjustment unit is capable of storing electrical energy of the power input and providing a regulated power input.

In some embodiments, each branch of the plurality of branches is further provided with a plurality of electrical devices, and the plurality of electrical devices are connected to the first output terminal and the second output terminal of the voltage stabilizing circuit to receive the regulated power input. In such embodiments, the voltage stabilizing circuit can reliably provide a regulated power input to the electrical device.

In some embodiments, each electrical device of the plurality of electrical devices includes an on-off circuit and an electrical load, an input terminal of the on-off circuit is connected to the first output terminal and the second output terminal of the voltage stabilizing circuit, and an output terminal of the on-off circuit is connected to the electrical load, and the on-off circuit is capable of turning off the electrical load when the electrical load is short-circuited. In such embodiments, the voltage stabilizing circuit may stabilize voltage amplitude of the branch within a predetermined threshold range in the case where the on-off circuit turns off the electrical load.

It should be understood that the contents described in this section are not intended to limit the key features or important features of the embodiments of the present disclosure, nor are they intended to limit the scope of the present disclosure. Other features of the present disclosure will become readily understood by the following description.

### BRIEF DESCRIPTION OF THE DRAWINGS

The above and other features, advantages and aspects of the various embodiments of the present disclosure will become more apparent in conjunction with the accompanying drawings and with reference to the following detailed description. In the drawings, like or similar reference numerals denote like or similar elements, wherein:
FIG. 1 shows a circuit diagram of a voltage stabilizing circuit according to one embodiment of the present disclosure;
FIG. 2 shows a circuit diagram of a voltage stabilizing circuit according to another embodiment of the present disclosure;
FIG. 3 shows a circuit diagram of a voltage stabilizing circuit according to another embodiment of the present disclosure;
FIG. 4 shows a structural schematic diagram of a DC microgrid according to one embodiment of the present disclosure;
FIG. 5 shows a circuit diagram of a DC microgrid according to one embodiment of the present disclosure;
FIG. 6 shows a waveform diagram for signal variation of a plurality of nodes in a DC microgrid in a case where a voltage stabilizing circuit is not used, according to one embodiment of the present disclosure; and
FIG. 7 shows a waveform diagram for signal variation of a plurality of nodes in a DC microgrid in a case where a voltage stabilizing circuit is used, according to one embodiment of the present disclosure.

### DETAILED DESCRIPTION

The preferred embodiments of the present disclosure will be described in more detail below with reference to the accompanying drawings. Although the preferred embodiments of the present disclosure are shown in the drawings, it should be understood that the present disclosure can be implemented in various forms and should not be limited by the embodiments set forth herein. Instead, these embodiments are provided to make the present disclosure more thorough and complete, and to fully convey the scope of the present disclosure to those skilled in the art.

The term "including" and its variations used in this article indicate open inclusion, that is, "including but not limited to". Unless otherwise stated, the term "or" means "and/or". The term "based on" means "at least partially based on". The terms "an example embodiment" and "an embodiment" mean "at least one example embodiment". The term "another embodiment" means "at least one additional embodiment". The terms "first", "second", etc. can refer to different or identical objects.

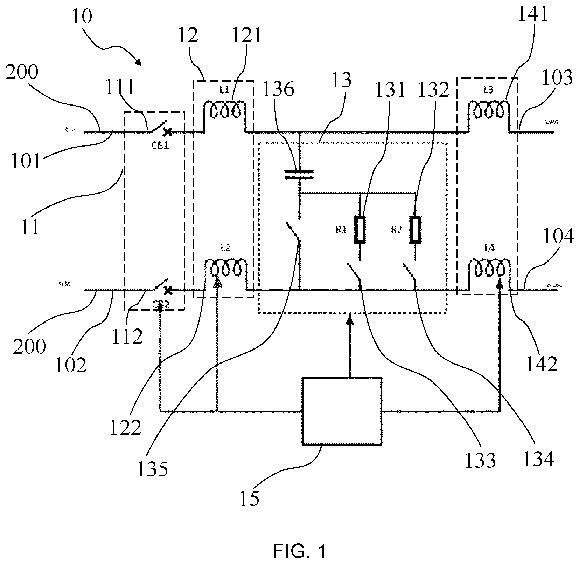

As described above, the DC microgrid usually provides power supply to the electrical devices in individual parks by extending a plurality of branches on the main circuit with DC power supply. However, in the case where a short circuit or other fault occurs in at least one electrical device, the voltage amplitude and current amplitude of other electrical device on the branch and the voltage amplitude and current amplitude of the main circuit will change drastically, which seriously affecting the power quality of the DC microgrid, and even bring a risk of burning out the electrical devices. Embodiments of the present disclosure provide a voltage stabilizing circuit. In this technical solution, a voltage stabilizing circuit is connected in a branch of the DC microgrid by using a switch unit, and the branch where the voltage stabilizing circuit is located is isolated from other branches on the DC microgrid by using the isolation unit. Then, the electric energy of the power input is store by using the adjustment unit, and the current of the power input is further stabilized by using the current stabilizing unit. In this way, the voltage amplitude and current amplitude of the power input can be stabilized within a predetermined threshold range, which greatly improves the power quality of the DC microgrid. In the following, the principle of the present disclosure will be described in conjunction with FIGS. 1 to 7.

FIG. 1 shows a circuit diagram of a voltage stabilizing circuit according to an embodiment of the present disclosure. As shown in FIG. 1, a fault current detection circuit 1 described herein generally includes a first input terminal 101, a second input terminal 102, an isolation unit 12, an adjustment unit 13, a first output terminal 103, a second output terminal 104 and a control unit 15. The first input terminal 101 and the second input terminal 102 are configured to receive power input. The switch unit 11 includes a first switch 111 and a second switch 112, and a first end of the first switch 111 is connected to the first input terminal 101 and a first end of the second switch 112 is connected to the second input terminal. The isolation unit 12 includes a first inductor 121 and a second inductor 122, a first end of the first inductor 121 being connected to a second end of the first switch 111 and a first end of the second inductor 122 being connected to a second end of the second switch 112. The adjustment unit 13 is connected to second ends of the first inductor 121 and the second inductor 122, and the adjustment unit 13 is capable of storing electrical energy of the power input and providing a regulated power input. The first output terminal 103 is connected to a node between the adjustment unit 13 and the first inductor 121, and the second output terminal 104 is connected to a node between the adjustment unit 13 and the second inductor 122, to output the regulated power input. The control unit 15 is connected to a control terminal of the switch unit 11, a control terminal of the isolation unit 12 and a control terminal of the adjustment unit 13. The control unit 15 is capable of controlling the first switch 111 and the second switch 112 to be turned on and off; the control unit 15 is capable of controlling the isolation unit 12 to change inductance values of the first inductor 121 and the second inductor 122; and the control unit 15 is capable of controlling a rate at which the adjustment unit 13 stores electrical energy.

In one embodiment, the first inductor 121 and the second inductor 122 in the isolation unit 12 are implemented by adjustable inductors connected to the control unit 15, so as to dynamically adjust the inductance value of the isolation unit 12. In other embodiments, the isolation unit 12 may be implemented by more or fewer inductors in combination with a plurality of controllable switches connected to the control unit 15. It should be understood that, based on the teachings given in the present disclosure, those skilled in the art may conceive of other types of isolation units to achieve the above functions, which fall within the scope of the present disclosure.

In one embodiment, as shown in FIG. 1, the voltage stabilizing circuit 10 further includes a current stabilizing unit 14. The current stabilizing unit 14 includes a third inductor 141 and a fourth inductor 142. A first end of the third inductor 141 is connected to a node between the adjustment unit 13 and the first inductor 121, and a second end of the third inductor is connected to the first output terminal 103. A first end of the fourth inductor 142 is connected to a node between the adjustment unit 13 and the second inductor 122, and a second end of the fourth inductor is connected to the second output terminal 104. A control end of the current stabilizing unit 14 is connected to the control unit 15, so that inductance values of the third inductor 141 and the fourth inductor 142 may be changed under control of the control unit 15. By setting the current stabilizing unit 14 at the output terminal, the current of the power input can be further stabilized.

In one embodiment, the first inductor 121 and the second inductor 122 in the current stabilizing unit 14 are implemented by adjustable inductors connected to the control unit 15, so as to dynamically adjust the inductance value of the current stabilizing unit 14. In other embodiments, the current stabilizing unit 14 may be implemented by more or fewer inductors in combination with a plurality of controllable switches connected to the control unit 15. It should be understood that, based on the teachings given in the present disclosure, those skilled in the art may conceive of other types of stabilizing units to achieve the above functions, which fall within the scope of the present disclosure.

In one embodiment, as shown in FIG. 1, the adjustment unit 13 includes a capacitor 136, a first resistor 131, a third switch 133, a second resistor 132, a fourth switch 134, and a fifth switch 135. A first end of the capacitor 136 is connected to a node between the first inductor 121 and the third inductor 141. A first end of the first resistor 131 is connected to a second end of the capacitor 136. One end of the third switch 133 is connected to a node between the second inductor 122 and the fourth inductor 142 and the other end of the third switch 133 is connected to a second end of the first resistor 131. The third switch 133 is capable of being turned on and off under control of control unit 15. A first end of the second resistor 132 is connected to the node between the capacitor 136 and the first resistor 131. One end of the fourth switch 134 is connected to a node between the second inductor 122 and the fourth inductor 142 and another end is connected to a second end of the second resistor 132. The fourth switch 134 is capable of being be turned on and off under control of control unit 15. One end of the fifth switch 135 is connected to a node between the second inductor 122 and the fourth inductor 142 and another end of the fifth switch is connected to the capacitor 136, the fifth switch 135 is capable of being turned on and off under control of the control unit 15.

In one embodiment, as shown in FIG. 1, in a case where the control unit 15 controls the third switch 133 to be turned on, a branch circuit where the first resistor 131 is located is turned on, and the capacitor 136 can be charged until the electricity amount in the capacitor 136 reaches a first electricity amount threshold. In a case where the control unit 15 controls the third switch 133 and the fourth switch 134 to be turned on, the branch circuits where the first resistor 131 and the second resistor 132 are located are turned on, and the capacitor 136 can be charged until the electricity amount in the capacitor 136 reaches the second electricity amount threshold. In a case where the control unit 15 controls the fifth switch 135 to be turned on, the branch circuit where the fifth switch 135 is located is turned on. At this time, the first resistor 131 and the second resistor 132 are short-circuited, and the capacitor 136 can be charged until the electricity amount in the capacitor 136 reaches the maximum electricity amount value of the capacitor 136.

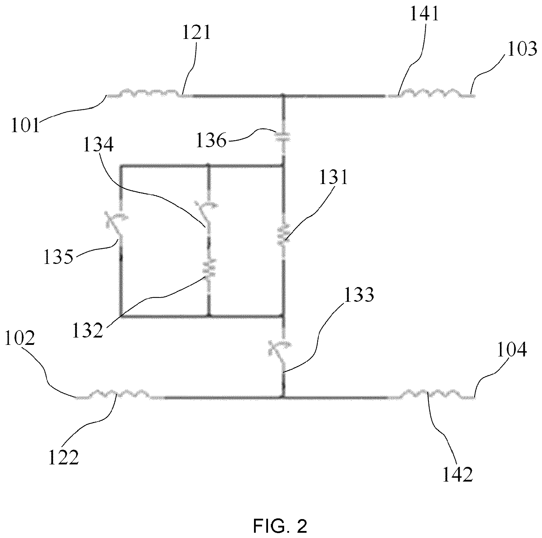

FIG. 2 shows a circuit diagram of a voltage stabilizing circuit 13 according to another embodiment of the present disclosure. In one embodiment, as shown in FIG. 2, the adjustment unit 13 includes a capacitor 136, a first resistor 131, a third switch 133, a second resistor 132, a fourth switch 134 and a fifth switch 135. A first end of the capacitor 136 is connected to the node between the first inductor 121 and the third inductor 141. A first end of the first resistor 131 is connected to the second end of the capacitor 136. One end of the third switch 133 is connected to a node between the second inductor 122 and the fourth inductor 142 and another end of the third switch 133 is connected to a second end of the first resistor 131. The third switch 133 is capable of being turned on and off under control of the control unit 15. A first end of the second resistor 132 is connected to a node between the first resistor 131 and the third switch 133. One end of the fourth switch 134 is connected to a node between the first resistor 131 and the capacitor 136 and another end of the fourth switch 134 is connected to a second end of the second resistor 132. The fourth switch 134 is capable of being turned on and off under control of the control unit 15. One end of the fifth switch 135 is connected to a node between the first resistor 131 and the capacitor 136 and another end of the fifth switch 135 is connected to a node between the first resistor 131 and the third switch 133, and the fifth switch 135 is capable of being turned on and off under control of the control unit 15.

In one embodiment, as shown in FIG. 2, in a case where the control unit 15 controls the third switch 133 to be turned on, the branch circuit where the first resistor 131 is located is turned on, and the capacitor 136 can be charged until the electricity amount in the capacitor 136 reaches the first electricity amount threshold. In a case where the control unit 15 controls the third switch 133 and the fourth switch 134 to be turned on, the branch circuit where the first resistor 131 and the second resistor 132 are located is turned on, and the capacitor 136 can be charged until the electricity amount in the capacitor 136 reaches the second electricity amount threshold. In a case where the control unit 15 controls the third switch 133 and the fifth switch 135 to be turned on, the branch circuit where the fifth switch 135 is located is turned on. At this time, the first resistor 131 and the second resistor 132 are short-circuited, and the capacitor 136 can be charged until the electricity amount in the capacitor 136 reaches the maximum electricity amount of the capacitor 136.

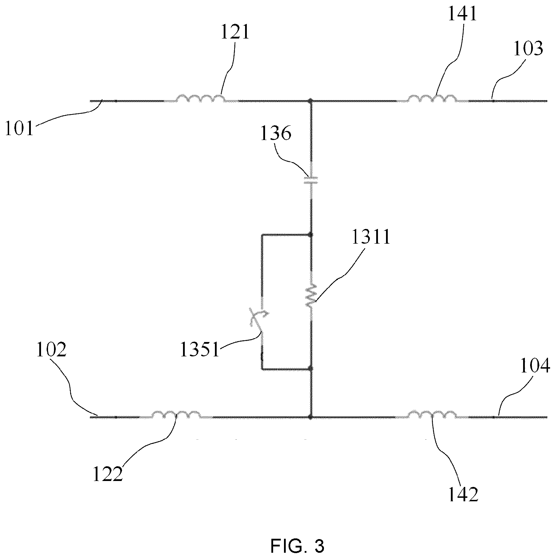

FIG. 3 shows a circuit diagram of a voltage stabilizing circuit 13 according to another embodiment of the present disclosure. In one embodiment, as shown in FIG. 3, the adjustment unit 13 includes a capacitor 136, a resistor 1311 and a switch 1351. A first end of the capacitor 136 is connected to a node between the first inductor 121 and the third inductor 141. A first end of the resistor 1311 is connected to a second end of the capacitor 136, and a second end of the resistor 1311 is connected to a node between the second inductor 122 and the fourth inductor 142. One end of the switch 1351 is connected to a node between the second inductor 122 and the fourth inductor 142 and another end is connected to a node between the capacitor 136 and the resistor 1311. The switch 1351 is capable of being turned on and off under control of the control unit 15.

In one embodiment, as shown in FIG. 3, in a case where the control unit 15 controls the switch 1351 to be turned off, the circuit where the resistor 1311 is located is turned on, and the capacitor 136 can be charged until the electricity amount in the capacitor 136 reaches a first electricity amount threshold. In a case where the control unit 15 controls the switch 1351 to be turned on, the branch circuit where the switch 1351 is located is turned on. At this time, the resistor 1311 is short-circuited, and the capacitor 136 can be charged until the electricity amount in the capacitor 136 reaches the maximum electricity amount value of the capacitor 136.

The voltage stabilizing circuit 13 described above has a simple structure, which is easy to be implemented. It should be understood that based on the teachings given in this disclosure, those skilled in the art may conceive of other voltage stabilizing circuits, all of which fall within the scope of this disclosure.

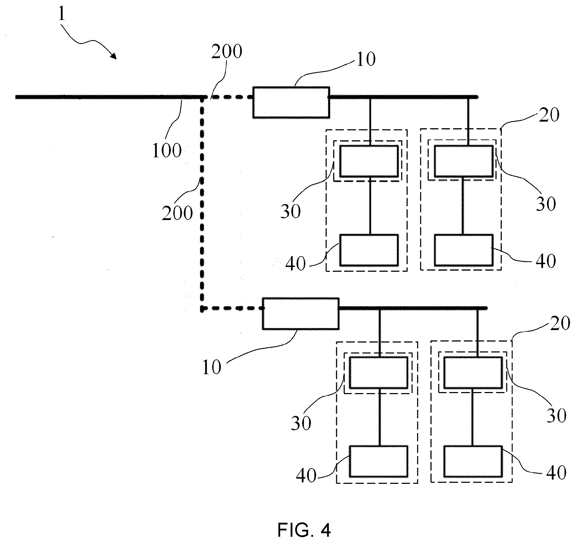

FIG. 4 shows a structural schematic diagram of a DC microgrid 1 according to one embodiment of the present disclosure. In one embodiment, as shown in FIG. 4, the DC microgrid 1 includes a main circuit 100 and a plurality of branches 200, and the plurality of branches 200 are connected to the main circuit 100. The main circuit 100 is configured to provide power input to individual branches 200. A voltage stabilizing circuit 10 is provided between each branch 200 in the plurality of branches 200 and the main circuit 100 to store the electrical energy of the power input and provide a regulated power input.

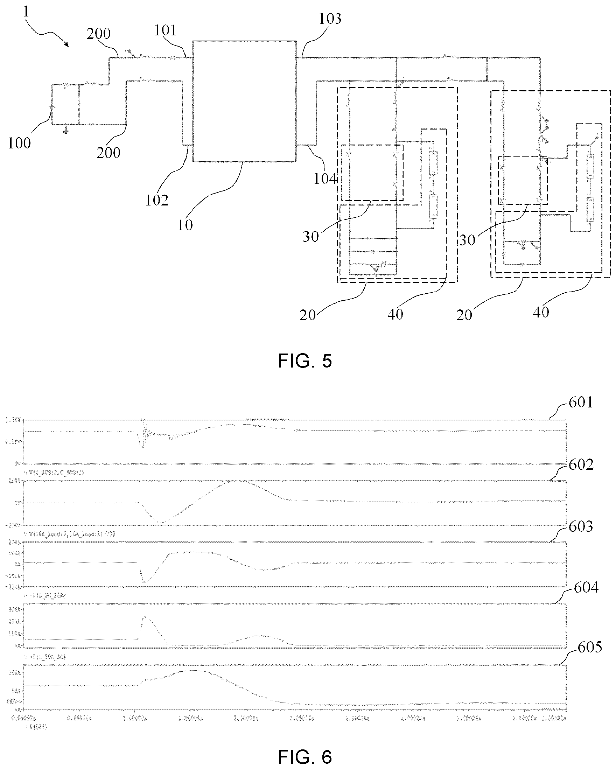

FIG. 5 shows a circuit diagram of a DC microgrid 1 according to one embodiment of the present disclosure. In one embodiment, as shown in FIG. 5, each branch 200 of the plurality of branches 200 is also provided with a plurality of electrical devices 20. The plurality of electrical devices 20 are connected to the first output terminal 103 and the second output terminal 104 of the voltage stabilizing circuit 10 to receive a regulated power input.

In one embodiment, as shown in FIG. 5, each electrical device 20 of the plurality of electrical devices 20 includes an on-off circuit 30 and an electrical load 40. An input terminal of the on-off circuit 30 is connected to the first output terminal 103 and the second output terminal 104 of the voltage stabilizing circuit 10 and the output terminal of the on-off circuit 30 is connected to the electrical load 40. In a case where the electrical load 40 is short-circuited, the on-off circuit 30 turns off the electrical load 40. At this time, the voltage and current amplitudes of the power input on the branch 200 and electrical devices 20 other than the short-circuited electrical device 20 will change.

In one embodiment, as shown in FIGS. 1 to 5, in a case where the voltage and current amplitudes of the power input on the branch 200 and electrical devices 20 other than the short-circuited electrical device 20 changes, the adjustment unit 13 can release electrical energy stored therein so that the voltage amplitude and current amplitude of the power supply input on the branch 200 and the electrical device 20 is stabilized within a predetermined threshold range, which greatly improves the power quality of the power input.

FIG. 6 shows a waveform diagram for signal variation of a plurality of nodes in a DC microgrid according to one embodiment of the present disclosure in a case where a voltage stabilizing circuit is not used. A graph 601 in FIG. 6 shows a voltage amplitude variation diagram of the power input on a branch 200 in the case where the voltage stabilizing circuit 10 is not used according to one embodiment of the present disclosure; a graph 602 in FIG. 6 shows a voltage amplitude variation diagram of the power input on an electrical device 20 other than the short-circuited electrical device 20 in the case where the voltage stabilizing circuit 10 is not used according to one embodiment of the present disclosure; a graph 603 in FIG. 6 shows a current amplitude variation diagram of the power input on an electric device 20 other than the short-circuited electrical device 20 in the case where the voltage stabilizing circuit 10 is not used according to one embodiment of the present disclosure; a graph 604 in FIG. 6 shows a current amplitude variation diagram of the power input on the short-circuited electrical device 20 in the case where the voltage stabilizing circuit 10 is not used according to one embodiment of the present disclosure; and a graph 605 in FIG. 6 shows a current amplitude variation diagram of the power input on a branch 200 in the case where the voltage stabilizing circuit 10 is not used according to one embodiment of the present disclosure.

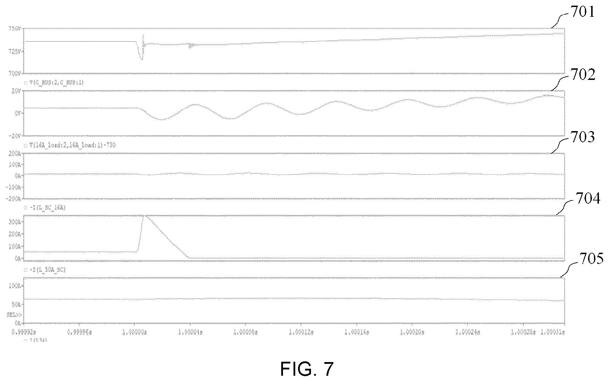

FIG. 7 shows a waveform diagram for signal variation of a plurality of nodes in a DC microgrid according to one embodiment of the present disclosure in a case where a voltage stabilizing circuit is used. A graph 701 in FIG. 7 shows a voltage amplitude variation diagram of the power input on the branch 200 in the case where the voltage stabilizing circuit 10 is used according to one embodiment of the present disclosure; a graph 702 in FIG. 7 shows a voltage amplitude variation diagram of the power input on an electrical device 20 other than the short-circuited power device 20 in the case where the voltage stabilizing circuit 10 is used according to one embodiment of the present disclosure; a graph 703 in FIG. 7 shows a current amplitude variation diagram of the power input on an electrical device 20 other than the short-circuited power device 20 in the case where the voltage stabilizing circuit 10 is used according to one embodiment of the present disclosure; a graph 704 in FIG. 7 shows a current amplitude variation diagram of the power input on the short-circuited electrical device 20 in a case where the voltage stabilizing circuit 10 is used according to one embodiment of the present disclosure; and a graph 705 in FIG. 7 shows a current amplitude variation diagram of the power input on a branch 200 in a case where the voltage stabilizing circuit is used according to one embodiment of the present disclosure.

In one embodiment, as shown in graphs 601 and 605 in FIG. 6, in the case where the voltage stabilizing circuit 10 is not used and at least one electrical device 20 on a branch 200 is short-circuited, fluctuation amplitude of the voltage amplitude and the current amplitude of the power input on the branch 200 is large. As shown in graphs 701 and 705 in FIG. 7, in the case where the voltage stabilizing circuit 10 is used and at least one electrical device 20 on a branch 200 is short-circuited, the fluctuation frequency of the voltage amplitude and the current amplitude of the power input on the branch 200 is reduced and the fluctuation amplitude tends to be stable.

In one embodiment, as shown in graphs 602 and 603 in FIG. 6, in the case where the voltage stabilizing circuit 10 is not used and at least one electrical device 20 on a branch 200 is short-circuited, fluctuation amplitude of the voltage amplitude and the current amplitude of the power input on the electrical device 20 other than the short-circuited electrical device 20 on the same branch 200 is large. As shown in graphs 702 and 703 in FIG. 7, in the case where the voltage stabilizing circuit 10 is used and at least one electrical device 20 on a branch 200 is short-circuited, the fluctuation frequency of the voltage amplitude and the current amplitude of the power input on the electrical device 20 other than the short-circuited electrical device 20 on the same branch 200 is reduced and the fluctuation amplitude tends to be stable.

In one embodiment, as shown in the graph 604 in FIG. 6, in the case where the voltage stabilizing circuit 10 is not used and at least one electrical device 20 on a branch 200 is short-circuited, amplitude fluctuation of the voltage amplitude of the power input 20 on the short-circuited electrical device is large. As shown in the graph 704 in FIG. 7, in the case where the voltage stabilizing circuit 10 is used and at least one electrical device 20 on a branch 200 is short-circuited, the fluctuation amplitude of the current amplitude of the power input on the short-circuited electrical device 20 is small.

The above has described various embodiments of the present disclosure. The above description is exemplary, not exhaustive, and is not limited to the disclosed embodiments. Without departing from the scope and spirit of the described embodiments, many modifications and changes will be apparent to those of ordinary skill in the field. The choice of terms used in this article is intended to best explain the principles, practical applications, or technical improvements in the market of each embodiment, or to enable other ordinary technicians in the field to understand the various embodiments disclosed herein.

## Claims

1. A voltage stabilizing circuit (10), **characterized by** comprising:
a first input terminal (101) and a second input terminal (102) for receiving power input;
a switch unit (11) comprising a first switch (111) and a second switch (112), a first end of the first switch (111) is connected to the first input terminal (101), and a first end of the second switch (112) is connected to the second input terminal (102);
an isolation unit (12) comprising a first inductor (121) and a second inductor (122), a first end of the first inductor (121) is connected to a second end of the first switch (111), and a first end of the second inductor (122) is connected to a second end of the second switch (112);
an adjustment unit (13) connected to second ends of the first inductor (121) and the second inductor (122), the adjustment unit (13) is capable of storing electrical energy of the power input and providing a regulated power input; and
a first output terminal (103) and a second output terminal (104), the first output terminal is connected to a node between the adjustment unit (13) and the first inductor (121), and the second output terminal (104) is connected to a node between the adjustment unit (13) and the second inductor (122), to output the regulated power input.

2. The voltage stabilizing circuit (10) according to claim 1, **characterized in that** the voltage stabilizing circuit (10) further comprises a control unit (15), the control unit (15) is connected to a control terminal of the switch unit (11), a control terminal of the isolation unit (12) and a control terminal of the adjustment unit (13), the control unit (15) is capable of controlling the first switch (111) and the second switch (112) to be turned on and off, the control unit (15) is capable of controlling the isolation unit (12) to change inductance values of the first inductor (121) and the second inductor (122), and the control unit (15) is capable of controlling a rate at which the adjustment unit (13) stores the electrical energy.

3. The voltage stabilizing circuit (10) according to claim 2, **characterized in that** the voltage stabilizing circuit (10) further comprises a current stabilizing unit (14), the current stabilizing unit comprises a third inductor (141) and a fourth inductor (142), a first end of the third inductor (141) is connected to a node between the adjustment unit (13) and the first inductor (121) and a second end of the third inductor (141) is connected to the first output terminal (103), a first end of the fourth inductor (142) is connected to a node between the adjustment unit (13) and the second inductor (122) and a second end of the fourth inductor (142) is connected to the second output terminal (104), a control terminal of the current stabilizing unit (14) is connected to the control unit (15), and the current stabilizing unit (14) is capable of changing inductance values of the third inductor (141) and the fourth inductor (142) under control of the control unit (15).

4. The voltage stabilizing circuit (10) according to claim 3, **characterized in that** the adjustment unit (13) comprises:
a capacitor (136) with a first end connected to a node between the first inductor (121) and the third inductor (141);
a first resistor (131) with a first end connected to a second end of the capacitor (136);
a third switch (133) with one end connected to a node between the second inductor (122) and the fourth inductor (142) and another end connected to a second end of the first resistor (131), the third switch (133) being capable of being turned on and off under control of the control unit (15);
a second resistor (132) with a first end connected to a node between the capacitor (136) and the first resistor (131);
a fourth switch (134) with one end connected to a node between the second inductor (122) and the fourth inductor (142) and another end connected to a second end of the second resistor (132), the fourth switch (134) being capable of being turned on and off under control of the control unit (15); and
a fifth switch (135) with one end connected to a node between the second inductor (122) and the fourth inductor (142) and another end connected to the capacitor (136), the fifth switch (135) being capable of being turned on and off under control of the control unit (15).

5. The voltage stabilizing circuit (10) according to claim 4, **characterized in that** the capacitor (136) is capable of being charged in a case where the control unit (15) controls the third switch (133) to be turned on until an electricity amount in the capacitor (136) reaches a first electricity amount threshold, the capacitor (136) is capable of being charged in a case where the control unit (15) controls the third switch (133) and the fourth switch (134) to be turned on until the electricity amount in the capacitor (136) reaches a second electricity amount threshold, and the capacitor (136) is capable of being charged in a case where the control unit (15) controls the third switch (133), the fourth switch (134) and the fifth switch (135) to be turned on until the electricity amount in the capacitor (136) reaches a maximum electricity amount value of the capacitor (136).

6. The voltage stabilizing circuit (10) according to claim 3, **characterized in that** the adjustment unit (13) comprises:
a capacitor (136) with a first end connected to a node between the first inductor (121) and the third inductor (141);
a first resistor (131) with a first end connected to a second end of the capacitor (136);
a third switch (133) with one end connected to a node between the second inductor (122) and the fourth inductor (142) and another end connected to a second end of the first resistor (131), the third switch (133) being capable of being turned on and off under control of the control unit (15);
a second resistor (132) with a first end connected to a node between the first resistor (131) and the third switch (133);
a fourth switch (134) with one end connected to a node between the first resistor (131) and the capacitor (136) and another end connected to a second end of the second resistor (132), the fourth switch (134) being capable of being turned on and off under control of the control unit (15); and
a fifth switch (135) with one end connected to a node between the first resistor (131) and the capacitor (136) and another end connected to a node between the first resistor (131) and the third switch (133), the fifth switch (135) being capable of being turned on and off under control of the control unit (15).

7. The voltage stabilizing circuit (10) according to claim 6, **characterized in that** the capacitor (136) is capable of being charged in a case where the control unit (15) controls the third switch (133) to be turned on until an electricity amount in the capacitor (136) reaches a first electricity amount threshold, the capacitor (136) is capable of being charged in a case where the control unit (15) controls the third switch (133) and the fourth switch (134) to be turned on until the a electricity amount in the capacitor (136) reaches a second electricity amount threshold, and the capacitor (136) is capable of being charged in a case where the control unit (15) controls the third switch (133), the fourth switch (134) and the fifth switch (135) to be turned on until the electricity amount in the capacitor (136) reaches a maximum electricity amount of the capacitor (136).

8. The voltage stabilizing circuit (10) according to claim 3, **characterized in that** the adjustment unit (13) comprises:
a capacitor (136) with a first end connected to a node between the first inductor (121) and the third inductor (141);
a resistor (1311) with a first end connected to a second end of the capacitor (136) and a second end connected to a node between the second inductor (122) and the fourth inductor (142); and
a switch (1351) with one end connected to a node between the second inductor (122) and the fourth inductor (142) and another end connected to a node between the capacitor (136) and the resistor (1311), the switch (1351) being capable of being turned on and off under control of the control unit (15).

9. The voltage stabilizing circuit (10) according to claim 8, **characterized in that** the capacitor (136) is capable of being charged in a case where the control unit (15) controls the switch (1351) to be turned off until an electricity amount in the capacitor (136) reaches a first electricity amount threshold, and the capacitor (136) is capable of being charged in a case where the control unit (15) controls the switch (1351) to be turned on until the electricity amount in the capacitor (136) reaches a maximum electricity amount value of the capacitor (136).

10. A DC microgrid (1), **characterized by** comprising:
a main circuit (100); and
a plurality of branches (200), wherein the plurality of branches (200) are connected to the main circuit (100) to receive power input provided by the main circuit (100), and each branch (200) in the plurality of branches (200) is provided with the voltage stabilizing circuit (10) according to any one of claims 1 to 9; the first input terminal (101) and the second input terminal (102) of the voltage stabilizing circuit (10) are connected to the main circuit (100), and the adjustment unit (13) is capable of storing electrical energy of the power input and providing a regulated power input.

11. The DC microgrid (1) according to claim 10, **characterized in that** each branch (200) of the plurality of branches (200) is further provided with a plurality of electrical devices (20), and the plurality of electrical devices (20) are connected to the first output terminal (103) and the second output terminal (104) of the voltage stabilizing circuit (10) to receive the regulated power input.

12. The DC microgrid (1) according to claim 11, **characterized in that** each electrical device (20) of the plurality of electrical devices (20) comprises an on-off circuit (30) and an electrical load (40), an input terminal of the on-off circuit (30) is connected to the first output terminal (103) and the second output terminal (104) of the voltage stabilizing circuit (10), and an output terminal of the on-off circuit (30) is connected to the electrical load (40), and the on-off circuit (30) is capable of turning off the electrical load (40) when the electrical load (40) is short-circuited.
